# EUROPEAN PATENT APPLICATION

(11) **EP 1 978 582 A1**
(43) Date of publication of application: **08.10.2008**
(21) Application number: 07007179.0
(22) Date of filing: 05.04.2007
(51) Int. Cl.: H01M 8/02, H01M 4/66, H01M 4/88, H01M 4/04

(54) **Process for the preparation of electrodes for use in a fuel cell**

(71) Applicant: ATOTECH Deutschland GmbH, 10553 Berlin (DE)
(72) Inventor: Metzger, Dieter, 10999 Berlin (DE); Lamprecht, Sven, 16727 Oberkrämer/Eichstädt (DE)
(74) Representative: Albrecht, Thomas

(57) **Abstract**

A process for the preparation of electrodes for use in a fuel cell comprising a membrane electrode assembly with a negative and a positive electrode is described, said process comprising the following steps:
(i) providing an electrode substrate and
(ii) coating said substrate electrolytically from a plating bath with a metal layer, said metal being selected from Ag, Au, Pd and its alloys.

## Description

### Field of Invention

The present invention relates to a process for the preparation of electrodes for use in a fuel cell and, in particular, in a direct methanol comprising a membrane electrode assembly with a negative and a positive electrode.

### Background of Invention

A fuel cell is an electrochemical cell in which a free energy change resulting from a fuel oxidation reaction is converted into electrical energy. A subgroup of fuel cells are fuel cells utilising methanol as fuel which are typically called direct methanol fuel cells (DMFCs) and generate electricity by combining aqueous methanol with air. DMFC technology has become widely accepted as a viable fuel cell technology that offers itself to many application fields such as electronic apparatuses, vehicles, military equipment, the aerospace industry, and so on.

Fuel cells such as DMFCs, like ordinary batteries, provide DC electricity from two electrochemical reactions. These reactions occur at electrodes (or poles) to which reactants are continuously fed. In DMFCs, for example, the negative electrode (anode) is maintained by supplying methanol, whereas the positive electrode (cathode) is maintained by the supply of air. When providing current, methanol is electrochemically oxidised at the anode electrocatalyst to produce electrons, which travel through the external circuit to the cathode electrocatalyst where they are consumed together with oxygen in a reduction reaction. The circuit is maintained within the cell by the conduction of protons in the electrolyte. One molecule of methanol (CH₃OH) and one molecule of water (H₂O) together store six atoms of hydrogen. When fed as a mixture into a DMFC, they react to generate one molecule of CO₂, 6 protons (H+), and 6 electrons to generate a flow of electric current. The protons and electrons generated by methanol and water react with oxygen to generate water. The methanol-water mixture provides an easy means of storing and transporting hydrogen, much better than storing liquid or gaseous hydrogen in storage tanks. Unlike hydrogen, methanol and water are liquids at room temperature and are easily stored in thin walled plastic containers. Therefore, DMFCs are lighter than their nearest rival hydrogen-air fuel cells.

The positive and negative electrodes in fuel cells such DMFCs are usually in contact with the reactive electrolyte medium. The medium often additionally contains acids like mineral acids or organic acids like acetic acid, propionic acid or formic acid. The addition of acids results in improved proton conduction in the fuel cell and is described in detail in ECS Transactions, 1 (6), 2006, pages 273 to 281.

Hence, the fuel cells are exposed to a harsh chemical environment and, hence, susceptible to corrosion. Such corrosion may result in electrical disconnection shortening the useful life and/or reducing the power density of fuel cells.

US Patents No. 6,338,913 and No. 6,399,232 suggest several corrosion management structures for enhancing the corrosion resistance of the current collectors in the microcell devices or structures. For example, current collectors can be manufactured from graphite materials; alternatively, current collectors can be formed of aluminum or copper coated with corrosion-resistant carbonaceous coatings. Although the graphite or carbon-coated current collectors have significantly enhanced corrosion resistance in comparison with the conventional metal current collectors, they are not mechanically robust (i.e., the graphite current collectors are easily broken, and the carbon coatings are easily peeled off, exposing the underlying metal core to the corrosive electrolyte), which will result in eventual electrical disconnection within or between the microcells.

Journal of Power Sources 144 (2005) 113-121 describes a design for an air-breathing and passive polymer electrolyte fuel cell. The anode current collector is made of a thin copper foil. The foil is provided with an adhesive and conductive coating and the cathode comprises a backing, a gold-plated stainless steel mesh and a current collector cut out from a printed circuit board. The anode is further described on page 115 as being made of a copper foil having an electron-conductive adhesive film on one or on both sides. The adhesive is based on a silver-filled acrylic substance.

However, such an adhesive is not very durable and is easily peeled off. Further, silver-filled acrylic compositions are expensive and, hence, cannot be used for the production of fuel cells on an industrial scale. Finally, these silver-filled acrylic compositions have a reduced conductivity.

WO 2004/006377 A1 relates to microcell electrochemical devices and assemblies with corrosion-resistant current collectors. The fibrous microcell structure disclosed therein comprises an inner electrode, a hollow fibrous membrane separator in contact with the inner electrode, an electrolyte embedded in the hollow fibrous membrane separator, and an outer electrode, wherein at least one of the inner and outer electrodes comprises a metal clad composite having two or more metal layers bonded together by solid-phase bonding. Such a solid-phase bonding, however, requires a hot co-extrusion process wherein two metals are pressed together at an elevated temperature. Such a process is disadvantageous in that the use of an elevated temperature cannot be applied to various substrates. Thus, the process described in WO 2004/006377 A1 requires the use of a harsh environment so as to solid-phase bond layers of two metals to form a multiple-layer metal clad composite.

EP 0913009 B1 relates to a current-carrying component for a fused carbonate fuel cell with anticorrosive coating. The anticorrosive coating consists of at least two metal layers and the first layer consists of nickel, gold or copper and the second layer consists of silver.

US 2006/0040169 A1 and US 2006/0040170 A1 relate to a flat panel direct methanol fuel cell and methods for making the same. The flat panel DMFCs described therein include an integrated cathode electrode sheet, a set of membrane electrode assemblies, an intermediate bonding layer, an integrated anode electrode sheet, and a fuel container base. The integrated cathode/anode electrode sheets are manufactured by using PCB compatible processes. To protect the cathode electrode plate from corrosion, these documents propose to use titanium meshes treated by gold plating, to provide a graphite protection layer on the electroplated copper layer or to electroplate gold or nickel alloys on an electroplated copper layer (cf. paragraphs [0010], [0024], [0053] and [0050], respectively, of US 2006/0040170 A1). However, these processes are complicated and, hence, costly.

It is the object underlying the present invention to provide a fuel cell such as, for example, methanol fuel cell having electrodes protected from corrosion in a simple and economic process.

### Summary of Invention

The present invention relates to a process for the preparation of electrodes for use in a fuel cell and, in particular, in a direct methanol fuel cell comprising a membrane electrode assembly with a negative and a positive electrode, said process comprising the following steps:
(i) providing an electrode substrate and
(ii) coating said substrate - from a plating bath with a metal layer, said metal being selected from Ag, Au, Pd and its alloys.

The coating from a plating bath can be performed by electrolytic plating applying an external current or an electroless (autocatalytic) plating or an immersion plating method. All plating procedures are well known in the art and apply an electrolyte containing the metal ions to be deposited. Electroless and immersion plating are for example described in Metal Finishing, 2006, pages 354 to 369. In this application the term plating relates to all three metallization methods.

It is an advantage of the present invention that by plating from electrolytic baths with the methods described above metal layers can be deposited which possess an accurate layer thickness, are pore free and can be deposited on nearly any substrate shape. Furthermore, it is possible to selectively metallize substrates on surface portions only, whereby functional structures can be plated on the substrates, e.g. electrode supplies etc.

### Detailed Description of Invention

The electrode substrate used in the present invention can be a conductive or a non-conductive substrate.

According to a preferred embodiment, said non-conductive substrates are selected from polyimide, polyamide, BT, ceramics such as alumina ceramics or reinforced polymeric materials such as FR1, FR2, FR3, FR4, FR5, CEM1, CEM3, GI or PEEK-type as described below:
- CEM1:: Composite material comprising a paper core impregnated with an epoxy resin and a woven glass cloth
- CEM3:: Composite material of dissimilar core material comprising an epoxy-resign impregnated non-woven fibreglass
- FR1, FR2:: Composite material of paper impregnated with a phenol resin
- FR3:: Composite material of an epoxy resin
- FR4, FR5:: Composite material of an epoxy resin reinforced with woven fibreglass
- BT:: Composite material of bismaleimide triazine
- BT/epoxy:: Composite material of bismaleimide triazine and an expoxy resin
- GI-type:: Composite material of multiple plies of woven glass cloth impregnated with a polyimide resin
- PEEK:: Polyether ether ketone

Such polymeric materials are commercially available and described, for example, in Coomb's Printed Circuits Handbook, 2001, pages 5.1 - 5.8 and 6.4.

Instead of the above mentioned non-conductive substrates also substrates made of stainless steel as described later on may be used in the process according to the present invention.

Finally, also substrates having a better conductivity than steel substrates can be used and, according to another preferred embodiment of the claimed invention, the substrate used is copper or a copper alloy.

Further preferred embodiments of the process according to the present invention are the subject-matter of dependent claims 8 to 27.

As mentioned above, different types of substrates can be used in the present invention to prepare corrosion-resistant electrodes.

For example, stainless steel can be used which already has sufficient corrosion resistance when used in a direct methanol fuel cell comprising a mixture of methanol, water and optionally acetic acid and/or formic acid. However, stainless steel as such is not sufficiently conductive to be used in a fuel cell such as a DMFC. Therefore, according to the present invention, a metal layer is provided on the stainless steel substrate to provide sufficient conductivity, i.e., a resistance on the surface in the range of equal or smaller than 9 mOhm/cm² and preferably equal or smaller than 4 mOhm/cm² and most preferably equal or smaller than 2 mOhm/cm².

Generally, the following layer thicknesses provide a sufficient conductivity for stainless steel base materials:
Silver: 1 to 40 µm, preferably 2 to 30 µm, most preferably 3 to 15 µm.
Gold: 1 to 40 µm, preferably 2 to 30 µm, most preferably 3 to 15 µm.
Palladium: 1 to 60 µm, preferably 2 to 40 µm, most preferably 3 to 30 µm.

Suitable steel substrates for use in the present invention are described herein below. In general, stainless steels can be used comprising Cr 16 to 28 wt.%, Ni 6 to 32 wt.%, Mo < 7 wt.%, and optionally Ti < 1 wt.% and/or Nb < 1 wt.%.

The following table lists suitable stainless steels identified by their reference number according to German and US industrial standards.

**Table 1: Examples of suitable stainless steels for use in the present invention**

| Germany | DIN Reference | USA |
|---|---|---|
| **Material Number** | **Material Abbreviation** | **AISI Reference** |
| A2 Cr-Ni steels V2A | | |
| 1.4303 | X4CrNi18-12 | AISI 305 |
| 1.4306 | X2CrNi19-11 | AISI 304L |
| 1.4307 | X2CrNi18-9 | AISI 304L |
| 1.4305 | XBCrNiS18-9 | AISI 303 |
| 1.4567 | X3CrNiCu18-9-4 | AISI 304Cu |
| 1.4301 | XSCrNi18-10 | AISI 304 |
| 1.4310 | X10CrNi18-8 | AISI 301 |
| 1.4541 | X6CrNiTi 18-20 | AISI 321 |
| A4 Cr-Ni-Mo steels V4A | | |
| 1.4429 | X2CrNiMo17-13-3 | AISI 316LN |
| 1.4436 | X3CrNiMo17-13-3 | |
| 1.4404 | X2CrNiMo17-12-2 | AISI 136L |
| 1.4435 | X2CrNiMo18-14-3 | AISI 316L |
| 1.4578 | X3CrNiCuMo17-11-3-2 | |
| 1.4401 | XSCrNiMo17-12-2 | AISI 316 |
| 1.4571 | X6 CrNiMoTi17-12-2 | AISI 316Ti |
| **A5 alloyed** | | |
| 1.4539 | X1 NiCrMoCu 25-20-5 | AISI904L |
| 1.4529 | X1 NiCrMoCuN 25-20-6 | |

Further suitable stainless steel substrates comprise 1.4300, 1.4316, 1.4370, 1.4406, 1.4427, 1.4441, 1.4452, 1.4455, 1.4536, 1.4546, 1.4567, 1.4576, 1.4578, 1.4597, 1.4893 steels.

The plating on the above mentioned stainless steel substrates is carried out essentially as follows:

First the stainless steel substrate is cleaned to remove oil, grease and soil by both electroless or cathodic and/or anodic treatment. The methods are well known in the art and for example described in Metal Finishing, 2006, pages 151 to 157.

Thereafter, preferably the stainless steel surface is pickled to remove thin films of oxides, oxide hydrates and other passive layers which negatively influence the bond strength of subsequent electroplated coatings. This method is well known in the art and for example described in Metal Finishing, 2006, pages 143 to 150.

The such treated surface is then activated by electroplating of a thin intermediate layer of metal, preferably gold from a strong acidic electrolyte. This method is also described in Metal Finishing, 2006, pages 162 to 163, where deposition of an intermediate nickel layer is described. Such intermediate metal layers are also called Strikes.

Afterwards plating of the corrosion resistant metal coating is performed.

In a further embodiment of the claimed invention, non-conductive substrates are used to prepare the electrode material.

The plating on non-conductive substrates such as FR4 and materials used for printed circuit board substrates such as epoxy resins, for example, is done as follows:

The non-conductive surface substrate is first cleaned by applying the standard cleaning processes used in the printed circuit board manufacture industry and for example described in Metal Finishing, 2006, pages 151 to 157. Usually, the non-conductive substrate have drilling holes, which have to be desmeared prior to metallisation.

In one embodiment of the invention the non-conductive substrate can be partially laminated with a metal foil made from Ag, Au or Pd already. This foil has about the same thickness as the plated metal layers. According to this embodiment only those parts of the substrate still have to be plated with a method according to the present invention, which are not covered by metal already. Those parts especially comprise drilling holes and structured surface parts, which can not be laminated.

The non-conductive substrates can be activated by various methods which are described, for example, in Handbuch der Leiterplattentechnik, Vol. 4, 2003, pages 292 to 300. These processes involve the formation of a conductive layer comprising carbon particles, Pd colloids or conductive polymers. Processes involving the use of carbon particles have been developed by the company "Electrochemicals" and are marketed, for example, under the trade name "Shadow". Another process is known in the art as the "black hole" process which has been developed by the company MacDermid. Processes involving the use of palladium colloids have been developed by the companies Shipley Ronal and Atotech and are known, for example, under the trade names "Crimson", "Conductron" and "Neopact", respectively.

Processes involving the use of conductive polymers have been developed by the companies OMI Enthone and Atotech and are known, for example, under the trade names "DMSE", "Seleo CP" and "Compact CP", respectively.

Some of these processes are described in the patent literature and examples are given below:

European patent EP 0 616 053 describes a process for applying a metal coating to a non-conductive substrate (without an electroless coating) comprising:
a. contacting said substrate with an activator comprising a noble metal/Group IVA metal sol to obtain a treated substrate;
b. contacting said treated substrate with a self accelerating and replenishing immersion metal composition having a pH above 11 to pH 13 comprising a solution of;
   (i) a Cu(II), Ag, Au or Ni soluble metal salt or mixtures thereof,
   (ii) a Group IA metal hydroxide,
   (iii) a complexing agent comprising an organic material having a cumulative formation constant log K of from 0.73 to 21.95 for an ion of the metal of said metal salt.

This process results in a thin conductive layer which can be used for subsequent electrocoating. This process is known in the art as the "Connect" process.

United States patent 5,503,877 describes the metallisation of non-conductive substrates involving the use of complex compounds for the generation of metal seeds on a non-metallic substrate. These metal seeds provide for sufficient conductivity for subsequent electroplating. This process is known in the art as the so-called "Neoganth" process.

United States patent 5,693,209 relates to a process for metallisation of a non-conductive substrate involving the use of conductive pyrrole polymers. The process is known in the art as the "Compact CP" process.

European patent 1 390 568 B1 also relates to direct electrolytic metallisation of non-conductive substrates. It involves the use of conductive polymers to obtain a conductive layer for subsequent electrocoating. The conductive polymers have thiophene units. The process is known in the art as the "Seleo CP" process.

Finally, the non-conductive substrate can also be activated with a colloidal or an ionogenic palladium ion containing solution, methods for which are described, for example, in Handbuch der Leiterplattentechnik, Vol. 4, 2003, pages 307 to 311.

Subsequent electroless plating of a thin intermediate Pd or PdP coating is carried out (P content: 0.5 to 10 weight %, preferably 0.5 to 6 weight %). Such plating is well known in the art and for example described in Handbuch der Leiterplattentechnik, Vol. 4, 2003, pages 383 to 384.

Afterwards plating of the corrosion resistant coating, preferably silver is performed. Silver plating baths are well known in the art and, for example described in Metal Finishing, 2006, pages 257 to 265. After plating of the silver layer, an optional tarnishing protection of Pd, Au, Rh, Ru can be applied.

According to the processes described above, metal layers are obtained on the substrates which provide for sufficient conductivity.

In general, the thickness of the metal layers depends on the design of the membrane electrode assembly and the substrate material used. For example, a substrate consisting of a non-conductive FR4 base material (36 x 36 mm, 240 holes, hole diameter 2 mm) should be coated with a silver layer having a thickness in the range of 2 to 20 µm, preferably 7 to 15 µm. Such a silver layer does not exhibit any corrosion in a medium comprising methanol, water and acetic acid and/or formic acid at a temperature of 70°C even after 2000 hours of DMFC operation. The conductivity of a silver layer having a thickness of 10 µm, for example, remains constant and its resistance is about 1.5 mOhm/cm².

Generally, the following layer thicknesses are preferred for non-conductive base materials:
Silver: 1 to 40 µm, preferably 2 to 20 µm, most preferably 5 to 15 µm.
Gold: 1 to 40 µm, preferably 2 to 20 µm, most preferably 5 to 15 µm.
Palladium: 5 to 200 µm, preferably 5 to 100 µm, most preferably 5 to 60 µm.

In another embodiment of the present invention a conductive substrate consisting, for example, essentially of copper or a copper alloy is used. While copper already has a sufficient conductivity for use as electrode material in fuel cells, it does not have sufficient corrosion resistance. Hence, according to the present invention, a metal layer is plated on the copper substrate such as a copper foil. Therefore, according to the present invention, a metal layer is provided on copper substrate to provide sufficient corrosion resistance that the underneath copper does not corrode. To prevent corrosion of the underlying copper substrate it is essential to deposit a pore free layer of corrosion resistant metal on the copper, which has hitherto been difficult to achieve.

Generally, the following layer thicknesses are preferred for copper or copper base materials:
Silver: 1 to 40 µm, preferably 2 to 20 µm, most preferably 3 to 10 µm.
Gold: 1 to 40 µm, preferably 2 to 20 µm, most preferably 3 to 10 µm.
Palladium: 1 to 40 µm, preferably 2 to 20 µm, most preferably 3 to 10 µm.

The layer thicknesses provide a corrosion resistant pore free metal coating.

According to the present invention, plating on conductive substrates is done as described below:

First the conductive substrate is cleaned to remove oil, grease and soil by electroless or cathodic and/or anodic treatment. These methods are well known in the art and for example described in Metal Finishing, 2006, pages 151 to 157.

Thereafter, the conductive metal surface is preferably pickled to remove thin films of oxides, oxide hydrates and other passive layers which negatively influence the bond strength of subsequently plated coatings. This method is well known in the art and for example described in Metal Finishing, 2006, pages 143 to 150.

The such treated surface in then preferably activated by electroplating of a thin intermediate layer of metal. This method is also described in Metal Finishing, 2006, pages 162 to 163, where deposition of e.g. an intermediate nickel layer is described. Such intermediate metal layers are also called Strikes. Afterwards plating of the corrosion resistant metal coating is performed.

The electrodes which are prepared as described above are further used to obtain a membrane electrode assembly for use in direct methanol fuel cells. In general, the membrane is made of a suitable plastic material that is permeable for protons. Such membranes are commercially available and one example is the perfluorinated sulfonic acid polymer Nafion sold by DuPont. This membrane separates the anode compartment from the cathode compartment. In a DMFC, for example, the membrane separates the methanol/water mixture in the anode compartment from the oxidising agent in the cathode compartment. In a PEMFC (Polymer Electrolyte Fuel Cell) the energy carrier is hydrogen as opposed to alcohols such as methanol (in the case of a DMFC). The reaction with hydrogen produces water; the reactions with methanol produce, besides water, such products as carbon dioxide, formic acid, formaldehyde, and other products. If, instead of pure hydrogen, reformate gas is used in the electrochemical conversion, it must be considered that carbon monoxide is also contained in the gas.

Moreover, it is to be assumed that sulfate ions and fluorine ions or fluorine are released in the interaction with the perfluorinated and sulfonated electrolyte membrane. Overall therefore, a corrosive mixture at a pH between 1.5 and 5 is present in the cells, which usually causes the degradation of the electrode.

As mentioned above, according to the process of the present invention, electrodes can be prepared in a simple and economic process which are protected from corrosion and, hence, are suitable for use in fuel cells.

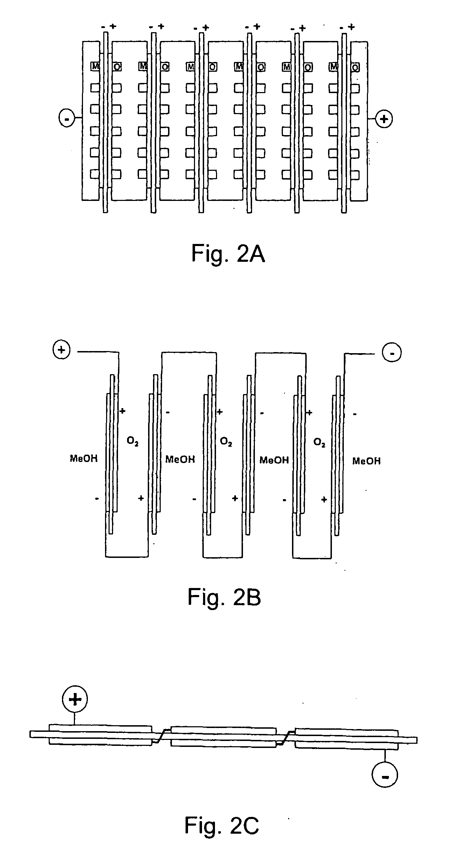

Preferably, the electrodes are used in a direct methanol fuel cell. Such DMFCs may comprise bipolar plates or monopolar plates or the stack of individual electrochemical cells comprising the membrane electrode assembly may be arranged in the form of a stripe. Corresponding designs are shown in Figures 2A to 2C.

### Brief description of drawings:

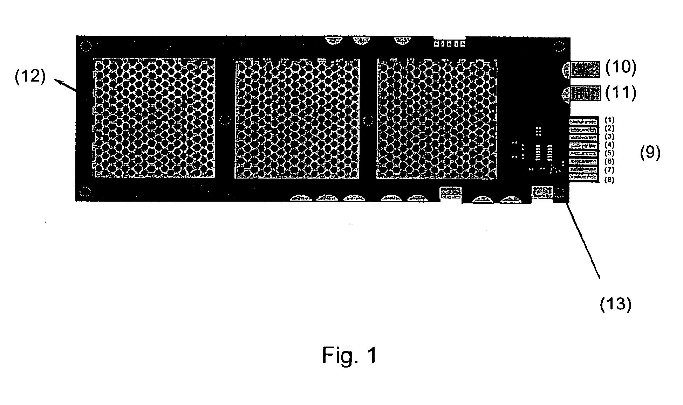

Figure 1 is a plan view of a direct methanol fuel cell for use with electrodes as described herein.
Figure 2A shows the design of a stack of individual electrochemical cells comprising bipolar plates with one flow field per electrode and one bipolar plate per two electrodes.
Figure 2B shows the design of a stack comprising monopolar plates with one flow field per two electrodes and one conductive foil per one electrode.
Figure 2C shows the design of a stack in a stripe-like manner.

### List of reference signs:

- (1), (2): Cathode of cell
- (3): 5V port of outer power supply
- (4): Data port of control circuit
- (5): Clock port of control circuit
- (6): Ground port of power supply
- (7), (8): Anode of cell
- (9): Signal pin of golden finger (signal circuit including 8 pins)
- (10): Anode flow inlet; inlet of fuel (3.0% - 10.0% v/v methanol)
- (11): Anode flow outlet; outlet of fuel (3.0% - 10.0% v/v methanol)
- (12): Cathode current collection mesh; current collection circuit at cathode side of a fuel cell
- (13): EMS control circuit; control circuit of energy management system, having functions of measuring intensity of current and voltage, temperature of module, and so on

The invention is further illustrated by the following examples:

### Example 1

The following process sequence can be applied for depositing a corrosion resistant coating on stainless steel substrates:
1. Degreasing of the steel substrate to be coated for 5 min. at a temperature of about 70°C. The degreasing agent is described in Metal Finishing, 2006, page 153, Table II, substrate stainless steel.
2. Cathodic cleaning for about 1 min. at a temperature of about 25°C, a pH of about 13 and a current density of 10 A/dm². A steel electrode is used. The composition for cathodic cleaning used is described in Metal Finishing, 2006, page 154, Table VI, substrate stainless steel. Such cleaners generally contain potassium or sodium hydroxide, desmutters, descalers, wetters and surfactants, which provide secondary cleaning to remove organic soils.
3. Pickling in an acidic pickling solution for about 1 min. at a temperature of about 70°C. The pickling composition is described in Metal Finishing, 2006, page 156, Table X, substrate stainless steel.
4. Activation of the stainless steel substrate by depositing a thin metal layer of gold in a strongly acidic galvanic gold bath, nickel in a nickel strike bath, silver in a silver strike bath, palladium. The metal layers usually have a thickness of 0.1 to 0.4 µm.
5. If nickel from a nickel strike bath is deposited in the activation step, preferably a thin layer of silver in a silver strike bath is deposited thereafter.
6. Deposition of the corrosion resistant metal coating of silver or gold.
7. In the case of corrosion resistant silver coating optional deposition of a thin anti-tarnish coating of Au, Pd, Rh or Ru.

### Example 1a

A stainless steel substrate (36 x 36 x 0,2 mm, 240 holes, hole diameter 2 mm) is cleaned and pre-treated according to the steps 1 - 3 of **Example 1.**

Next, the substrate is rinsed with water and then activated by depositing a thin layer of silver (Strike) from a bath containing KAg(CN)₂ 4 g/I, KCN, 80 g/l, K₂CO₃, 15 g/l. The substrate is activated in this bath at a temperature of 25°C for about 15 s at a current density of 1 A/dm². Such a bath is described in Metal Finishing, 2006, page 258.

Next, the activated substrate is transferred to a silver bath to deposit the corrosion resistant metal coating of silver. The silver bath is composed as follows: KAg(CN)₂ 20 g/I, KCN, 80 g/l, K₂CO₃, 15 g/l. The substrate is activated in this bath at a temperature of 25°C for about 25 min. at a current density of 1 A/dm². Such a bath is described in Metal Finishing, 2006, page 257.

### Example 1b

To obtain a corrosion resistant metal coating of gold on a steel substrate, the substrate used in Example 1a above is first degreased with and pickled according to the steps 1 - 2 of **Example 1.**

Thereafter, the substrate is activated by depositing a thin layer of gold from a gold bath which comprises the following components: KAu(CN)₂ 4 g/l, dipotassium phosphate, 22 g/l, KCN, 15 g/l. The substrate is activated in this bath at a temperature of 30°C for about 1 min at a current density of 2 A/dm².

Finally, the corrosion resistant metal coating of gold is deposited from a gold bath KAu(CN)₂ 18 g/I, dipotassium phosphate, 30 g/l, KCN, 15 g/l. The substrate is activated in this bath at a temperature of 65°C for about 50 min at a current density of 0.3 A/dm². Such a bath is described in Metal Finishing, 2006, page 220.

### Example 2

The following process sequence can be applied for depositing a corrosion resistant coating on non-conductive substrates:
1. Desmear. The desmear process can be carried out as described, for example, in EP 1 390 568 B1. It comprises the steps of swelling the substrate with an organic swelling agent, etching the substrate with a permanganate solution and removing manganese dioxide with a suitable reducing agent. Between these steps and at the end of the reducing step, the substrate is usually rinsed.
2. Activation of the non-conductive substrate by depositing a thin metal layer, preferably of palladium.
3. Optionally, deposition of a of a palladium layer having a thickness of 0.1 to 0.4 µm
4. Deposition of the corrosion resistant metal coating of silver or gold.

### Example 2a

A non-conductive substrate made from FR4-base material (36 x 36 x 0,2 mm, 240 holes, hole diameter 2 mm) is treated as described below, the treatment comprising the steps of desmear, activation and Pd deposition.
1. Desmear:
Sodium carbonate solution 40 g/I (ultra sonic treatment)

| | 60 sec | 75°C |
|---|---|---|
| Sweller | 300 sec | 70°C |
| Permanganate solution (50 g/l) | 240 sec | 80°C |
| Reduction solution (Sodium hypophoshphite) | 60 sec | 50°C |

2. Activation using a palladium colloide as described in Example 1 of US 5,421,989 containing palladium chloride, hydrochloric acid and polyvinylpyrrolidone.

| | 90 sec | 55°C |
|---|---|---|
| Optional: temper substrate | 1 h | 100°C |

3. Chemical palladium deposition using a plating bath containing essentially palladium phosphate, 1,1 g/I, sodium hypophosphite, 4,8 g/I, ethylene diamine, 10 g/l.

| | 10 min | 52°C |
|---|---|---|
| Temper substrate | 1 h | 120°C |

To obtain a corrosion resistant silver coating on the substrate obtained above, the following additional steps are carried out:
4. Pickling according to step 3 of **Example 1.**
5. Activation by depositing a thin layer of silver from a silver bath (Strike) according to Example 1 a.
6. Deposition of the corrosion resistant metal coating of silver from a silver bath according to example 1 a.

### Example 2b

To obtain a corrosion resistant metal coating of gold, the substrate is first treated according to steps 1 to 3 described above.

Subsequently, the substrate is pickled according to step 3 of **Example 1.**

The pickling step is followed by activation by depositing a thin layer of gold from a gold bath (Strike) according to Example 1 b for 60 s at 25°C and a current density of 2 A/dm².

Finally, the corrosion resistant metal coating of gold is deposited from a gold bath according to Example 1 b for 50 min at 65°C and a current density of 0.3 A/dm².

### Example 3

This example describes a process for depositing a corrosion resistant coating on a conductive substrate comprising plating of Ni-Pd/Ni-Au. First, the copper substrate (36 x 36 x 0,2 mm, 240 holes, hole diameter 2 mm) is pre-treated according to the steps 1 - 3 of **Example 1.**

Plating of Ni-Pd/Ni-Au is done according to the following process steps:
1. Electrolytic nickel deposition, in a bath containing 350 g/I nickel sulfamate and 30 g/I boric acid for 45 min, 55°C, 4 A/dm². Such bath is described in Metal Finishing, 2006, pages 227 to 239.
2. Deposition of a thin metal layer of gold (Strike) according to Example 1 b, 1 min, 30°C, 2 A/dm².
3. Deposition of palladium nickel from an electrolytic bath containing essentially Pd(NH₃)₄Cl₂, 20 g/l, ammonium chloride, 60 g/l, nickel chloride, 12 g/l (25 min, 30°C, 1 A/dm²). Such bath is described in Metal Finishing, 2006, pages 248 to 249.
4. Deposition of gold from a gold bath according to Example 1b, 25 min, 65°C, 0,3 A/dm².

### Example 4

The same substrate obtained by pre-treatment steps 1 to 3 described in Example 1 above is coated with a Pd/Ni-coating by immersing the substrate into the Pd/Ni bath according to Example 3 for 25 min at a temperature of 55°C and a current density of 1 A/dm².

### Example 5

The same substrate obtained by pre-treatment steps 1 to 4 according to Example 3 above is coated with a Pd/Ni-Ag-coating by subjecting said substrate to the following additional process steps:
5. Deposition of palladium nickel in a bath according to Example 3 for 25 min at 55°C at a current density of 1 A/dm².
6. Activation by depositing a thin layer of silver from a bath (Strike) according to Example 1 for 15 s at 25°C at a current density of 5 A/dm².
7. Deposition of the corrosion resistant metal coating of silver from a silver bath according to Example 1 for 25 min at 25°C at a current density of 1 A/dm².

### Example 6

The substrate obtained by applying the pre-treatment steps described in Example 3 is provided with a corrosion resistant metal coating of silver by applying, to said substrate, the following additional steps:
5. Activation by depositing a thin layer of silver (Strike) from a bath according to Example 1 for 15 s at a current density of 5 A/dm².
6. Deposition of the corrosion resistant metal coating of silver from a silver bath according to Example 1 for 25 min at a current density of 1 A/dm².

## Claims

1. A process for the preparation of electrodes for use in a fuel cell comprising a membrane electrode assembly with a negative and a positive electrode, said process comprising the following steps:
(i) providing an electrode substrate and
(ii) coating said substrate from a plating bath with a metal layer, said metal being selected from Ag, Au, Pd and its alloys.

2. The process according to claim 1 wherein said substrate is selected from non-conductive substrates.

3. The process according to claim 2 wherein said non-conductive substrates are selected from epoxy resin substrates, ceramics, polyimide substrates, substrates consisting of composite material of bismaleimide triazine substrates consisting of reinforced polymeric materials and substrates partially laminated with a metal foil.

4. The process according to claim 3 wherein said ceramics are alumina ceramics and wherein said substrates consisting of reinforced polymeric materials are selected from the group consisting of FR1, FR2, FR3, FR4, FR5, CEM1, CEM3 and GI.

5. The process according to claim 1 wherein said substrate is a conductive substrate.

6. The process according to claim 5 wherein said conductive substrate is a stainless steel substrate.

7. The process according to claim 5 wherein said conductive substrate is a copper or a copper alloy substrate.

8. The process according to claim 1 wherein the metal layer has a resistance ≤ 9 mOhm/cm².

9. The process according to claim 8 wherein the metal layer has a resistance ≤ 2 mOhm/cm².

10. The process according to claim 2 wherein the substrate is coated with a first seed and a second intermediate layer made of Pd and a third top layer made of Ag or Au.

11. The process according to claim 7 wherein the substrate is coated with a first layer made of Pd and a second layer made of Ag.

12. The process according to claim 11 wherein a third layer made of Au is coated on top of said second layer.

13. The process according to claim 11 or 12 wherein an intermediate layer made of Ni or an alloy thereof is provided between said substrate and said first layer.

14. The process according to claim 6 wherein said stainless steel substrate is coated with a first layer made of Au and a second layer made of Ag.

15. The process according to claim 6 wherein said stainless steel substrate is coated with a first layer made of Ni and a second layer made of Ag.

16. The process according to claim 6 wherein said stainless steel substrate is coated with a first layer made of Au and a second layer made of Au.

17. The process according to claim 2 wherein said non-conductive substrate is coated with a first layer made of Pd and a second layer made of Ag.

18. The process according to claim 2 wherein said non-conductive substrate is coated with a first layer made of Au and a second layer made of Au.

19. The process according to claims 11 and 14-17 wherein a tarnishing protection layer made of Pd, Au, Rh or Ru is provided on top of said Ag layer.

20. The process of claim 6 wherein the substrate is coated electrolytically from a galvanic bath with a metal layer having a thickness of 1 to 40 µm.

21. The process of claim 20 wherein the substrate is coated electrolytically from a galvanic bath with a metal layer selected from the group consisting of Ag having a thickness from 3 to 15 µm, Au having a thickness of 3 to 15 µm and palladium having a thickness from 3 to 30 µm.

22. The process of claim 2 wherein the substrate is coated electrolytically from a galvanic bath with a metal layer selected from the group consisting of Ag having a thickness from 1 to 40 µm, Au having a thickness of 1 to 40 µm and palladium having a thickness from 5 to 200 µm.

23. The process of claim 22 wherein the Ag/Au layer has a thickness of 5 to 15 µm and wherein the Pd layer has a thickness of 5 to 60 µm.

24. The process of claim 7 wherein the substrate is coated electrolytically from a galvanic bath with a metal layer having a thickness of 1 to 40 µm.

25. The process of claim 24 wherein the metal layer has a thickness of 3 to 10 µm.

26. The process according to claim 1 wherein the fuel cell is a direct methanol fuel cell.

27. The process according to claim 26 wherein the direct methanol fuel cell comprises bipolar plates contacting the membrane electrode assembly.
